# EUROPEAN PATENT APPLICATION

(11) **EP 1 040 750 A1**
(43) Date of publication of application: **04.10.2000**
(21) Application number: 00200465.3
(22) Date of filing: 14.02.2000
(51) Int. Cl.: A01D 61/00, A01F 12/16, A01D 41/14

(54) **Improvements to a feederhouse on an agricultural combine**

(30) Priority: 01.04.1999 US 285141
(71) Applicant: NEW HOLLAND BELGIUM N.V., B-8210 Zedelgem (BE)
(72) Inventor: Digman, Michael J., Denver, PA 17517 (US); Walker, James D., Lititz, PA 17543 (US); Bennet, James A., Narvon, PA 17555 (US)
(74) Representative: Vandenbroucke, Alberic

(57) **Abstract**

The invention discloses improvements to a feederhouse on a combine harvester (1). These improvements include a pivoting faceplate (40) between the header (12) and feederhouse (21). The pivoting faceplate has faceplate position indicia (48) to assist an operator in properly positioning the faceplate. The improvements also include a front drum adjustment mechanism (60), which uses a polygonal cam (61) with cam position indicia (62) to properly position the front drum (22). There is also a stone roll mount plate (80) permitting the proper adjustment of the stone roll (27) relative to the feederhouse floor (25A). The arrangement also includes stone roll position indicia (87) and a pointer (85) to help position the stone roll.

## Description

This invention relates to the improvement of a feederhouse on an agricultural combine. More specifically, the invention allows for the adjustment of the front drum of the feederhouse, the adjustment of a pivoting faceplate on the feederhouse and the adjustment of a stone roll in a feederhouse.

Mechanical harvesting of grain has taken place for decades. However, efforts continue in the attempt to make harvesting operations more efficient and effective. A combine harvester of the type disclosed by US-A-4,846,198 generally includes a header, which cuts the crop. The header then moves the cut crop into a feeder house. The feederhouse lifts the cut crop into the threshing and separation areas of the combine. The grain is separated from the stalk by a rotor of the threshing system. The grain is then moved and stored in a grain tank. The chaff and trash are deposited from the rear of the combine.

For optimum threshing and separation of the harvested crop, an even flow of crop material has to be provided to the threshing system. The operation of the feederhouse is critical in this respect. The feederhouse has to be able to cope with a constantly varying crop input as the grain density is not constant at all locations in the field and the combine is not always operated at a constant speed. Furthermore the feederhouse is used for handling a wide variety of crops, including small grains, such as wheat, or larger products such as corn cobs. The combine may equally be equipped with several headers, depending on the crop to be harvested. The feederhouse has to be able to receive and carry all of these headers.

Consequently there is a need for versatile feederhouses which can be adjusted for operation under a wide range of circumstances.

The feederhouse typically consists of a conveying chain which pushes the cut crop from the header to the front of the threshing system. Such embodiment is shown in US-A-4,362,005. The conveying chain has several cross pieces to assist in moving the crop and to ensure proper spacing. The conveying chain is powered and also positioned by a front drum and a rear drum. The front drum is positioned approximately behind the header and the rear drum is positioned approximately in front of the threshing system. The drums are rotated to make the conveyor chain push the cut crop flow or crop mat upwards along the floor of the feederhouse and towards the threshing system.

Besides lifting or elevating the cut crop to the threshing and separating systems, the feederhouse provides several other functions. First, the feederhouse helps to properly position the header relative to the ground. Second, the feederhouse can be the location of a stone detection and removal means. Frequently, during farming operations, the header will inadvertently receive a stone. If the stone enters the threshing system in the combine, expensive damage will result to the threshing components. It is a critical function of a stone detection and removal system to prevent a stone from damaging the threshing system. A typical stone detection and removal system is disclosed by US-A-3,971,390. The system includes a cylindrical stone beater or stone roll positioned near the mid-point of the feederhouse. The stone roll rotates allowing the crop mat to continue towards the rear drum and threshing system. A stone that is too large is forced from the feederhouse through a stone trap door beneath the stone roll.

Unfortunately there are several deficiencies to the current feederhouse design. For instance, it is difficult to accurately position the feederhouse relative to the header. Furthermore, it is difficult to properly adjust the position of the front drum of the feederhouse. Frequently it is desirable to adjust the position of the front drum depending on the crop and farming conditions. By adjusting the distance of the front roll from the bottom of the feederhouse, the thickness of the crop mat flowing through the feederhouse may be increased or decreased. It is also difficult to adjust the stone roll. Depending on the crop and field conditions, it is desirable to move the stone roll either closer or farther from the feederhouse floor. If the stone roll is moved to close to the feederhouse floor, the amount of crop able to be elevated to the threshing system could be undesirably decreased. Conversely, if the stone roll is positioned too high, then a stone may enter the threshing system catastrophically damaging the combine.

An invention that could resolve these issues would represent an improvement to the art.

According to one aspect of the present invention there is provided a combine harvester, comprising:
a wheeled main frame;
crop processing means, mounted to said main frame;
a feederhouse attached to said main frame for conveying harvested crop to said crop processing means and comprising a pair of sidewalls between which extends a conveyor trained about a front drum and a rear drum, said front drum being mounted to at least one pivot arm which is pivotally attached to one of said sidewalls; and
means defining the lowest position of said pivot arm,
   characterized in that it further comprises an adjustment mechanism for adjusting the position of said defining means.

This arrangement enables the repositioning of the front drum and the front portion of the conveyor to adapt to varying crops, e.g. when the operator has to switch from corn to pea harvesting. Repositioning may also be required when the mean throughput of the crop changes substantially.

Advantageously, the adjustment mechanism may comprise a pivotable cam which slideably contacts an adjustment plate attached to a pivot arm of the front drum. This cam may have the shape of a polygon which is mounted for pivotment about an eccentric axis. The adjustment mechanism may include marks or indicia, such as numerals, providing a direct indication of the position of the front drum during adjustment thereof. Such indicia may be provided on the pivotable cam, near the lip of the adjustment plate which is contacted by the cam.

According to another aspect of the present invention there is provided a combine harvester comprising a feederhouse provided with a faceplate which is pivotally attached to at least one sidewall for receiving a header, which feederhouse is provided with a plurality of faceplate position indicia.

The indicia assist an operator in positioning or repositioning the faceplate correctly for different headers or different crops. The indicia may be viewed through an indicator aperture. A faceplate adjustment rod may facilitate rotation of the faceplate about the pivot.

According to a further aspect of the present invention there is provided a combine harvester,
comprising a feederhouse (21) having a stone ejection mechanism including a stone roll (27) mounted between the sidewalls (25) and a stone trap door (26) attached to the feederhouse near said stone roll (27); and
   wherein said stone roll (27) is journalled in a mount plate (80) enabling attachment of the stone roll (27) to a sidewall (25) in a plurality of positions relative to said stone trap door (26).

This arrangement allows for easy adjustment of the distance between stone roll the stone trap door, e.g. when the stone roll has to be raised for harvesting corn. Otherwise the stone trap door may already open when whole corn cobs are conveyed along the feederhouse floor.

Advantageously the sidewall is provided with stone roll indicia and the mount plate has a pointer that may be aligned with one of the indicia to properly adjust the stone roll.

An embodiment of the present invention will now be described in further detail, with reference to the accompanying drawings in which:
Figure 1 is an over-all side elevation of a combine equipped with a feederhouse and a header;
Figure 2 is an enlarged side elevation of the feederhouse of Figure 1;
Figure 3 is a fragmentary enlarged view of the pivoting faceplate on the front portion of the feederhouse of Figure 2, showing it pivoted counter-clock wise to the maximum header tilt down position; the faceplate position mark '1' shows in the indicator aperture;
Figure 4 is similar to Figure 3, but shows the pivoting faceplate tilted clockwise to tilt the header up to where the faceplate position marks '4' and '5' are showing in the aperture;
Figure 5 is a fragmentary enlargement of a front portion of the feederhouse seen in the previous Figures with the pivoting faceplate broken away to better show the pivot arm, the cam and the arm pivot mount;
Figure 6 is a detailed sectional view of the cam taken on the line 6-6 of Figure 5;
Figure 7 is a side elevation of the structure of Figure 6 showing two positions of the cam.
Figure 8 is an enlarged sectional view of the pivot arm taken on the line 8-8 of Figure 5 showing the drum arm spring and arm pivot mount;
Figure 9 is an enlarged side elevation of the portion of the feederhouse comprising the stone trap door with the stone roll mounted on the stone roll mount plate; the stone roll mount plate is set at the lowest setting; the view shows a rock path through the feederhouse flexing the conveyor chains upwardly until the stone encounters the stone roll which forces the conveyor chain down to open the stone trap door; and
Figure 10 is a view similar to Figure 9, but with the stone roll mount plate at its top position (the pointer is aligned with the stone roll position mark '7'); the stone roll is raised higher and would require a bigger stone to open the stone trap door.

Left and right references are used as a matter of convenience and are determined by standing at the rear of the combine and facing the forward end in the normal direction of travel. Likewise, forward and rearward are determined by normal direction of travel of the combine. Upward or downward orientations are relative to the ground or operating surface. Horizontal or vertical planes are also relative to ground.

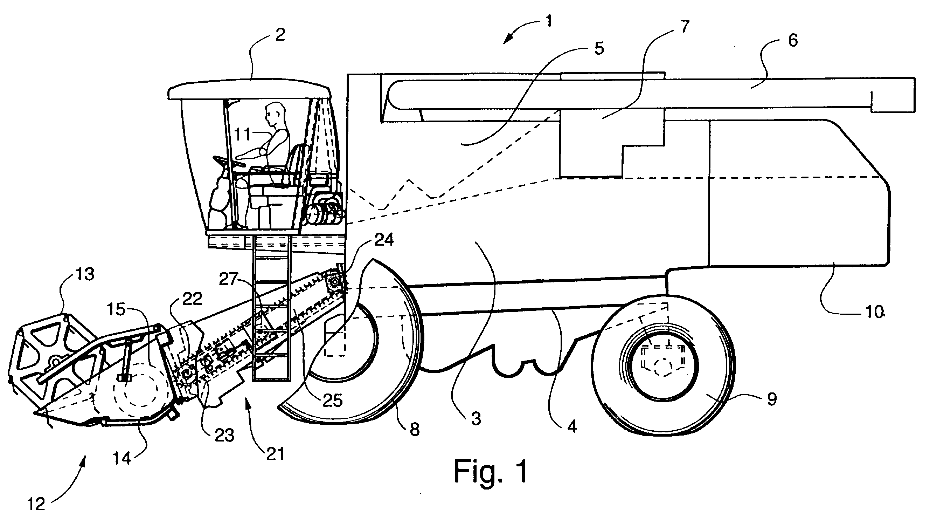

As seen in Figure 1, the invention is located on a typical combine harvester 1 having a pair of front wheels 8 (only one shown) and a pair of rear wheels 9 (only one shown) for providing movement over the ground. At the front of the combine is a header 12 for cutting a crop. As the combine harvester 1 and its header 12 are moved forward, grain and stalk are cut by the header 12, which moves this crop material into an auger trough 14. A transverse auger 15 pushes the grain and stalk in the auger trough 14 to the centre of the header. The header 12 illustrated in Figure 1 is a wheat or similar small grain header. The header 12 may be positioned and re-positioned relatively high or low to the ground. The header 12 may also be tilted to the left or right. These features are constantly being adjusted depending on the terrain and crop conditions. The header reel 13 may also be positioned relative to the header 12. The position and rotation of the header reel 13 again depend on the terrain and crop conditions. Moveable headers and header reels are well known and established in the art.

Located at the centre of the header is the straw elevator or feederhouse 21. The feederhouse 21 moves the grain and stalks rearward into the threshing and separating system 3 and cleaning system 4 of the combine harvester 1. After processing and cleaning, the processed grain is stored in a grain tank 5 located near the top of the combine harvester 1. The grain is removed from the grain tank 5 by an unloading auger (not shown) through an unload tube 6. The grain is discharged into a separate vehicle such as a truck or tractor-pulled grain cart, which follows the harvester. The processed grain usually is discharged while the combine and separate vehicles are moving. Unloading augers and unload auger grain tubes are well known and established in the art.

The trash or chaff is ejected from the rear of the combine by a chaff spreader 10. The operator 11 controls the combine harvester 1 from the cab 2 located behind the header 12 and at the front of the combine. From the cab the operator can observe most of the various combine functions. The cab 2 usually has a large glass window or several windows which afford the operator the maximum ability to monitor the header 12. The combine harvester 1 and various systems are powered by an engine 7 generally positioned at the rear of the combine harvester 1.

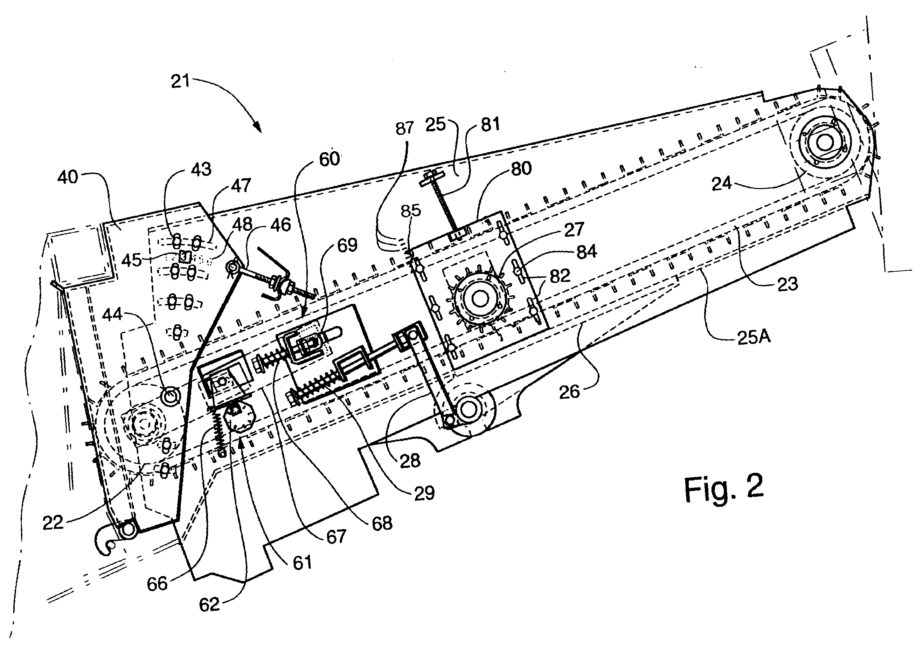

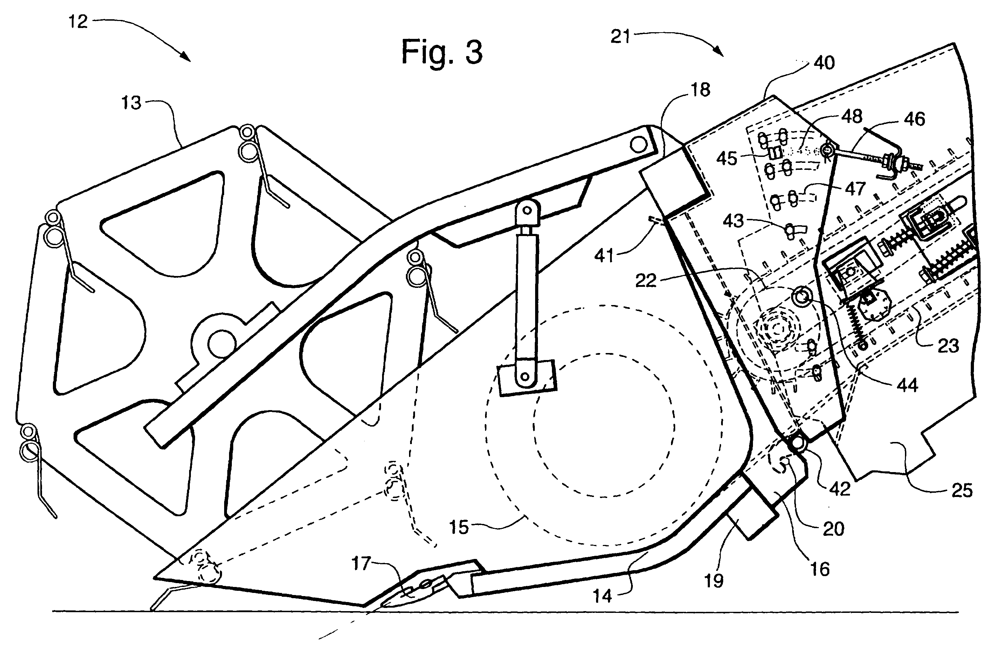

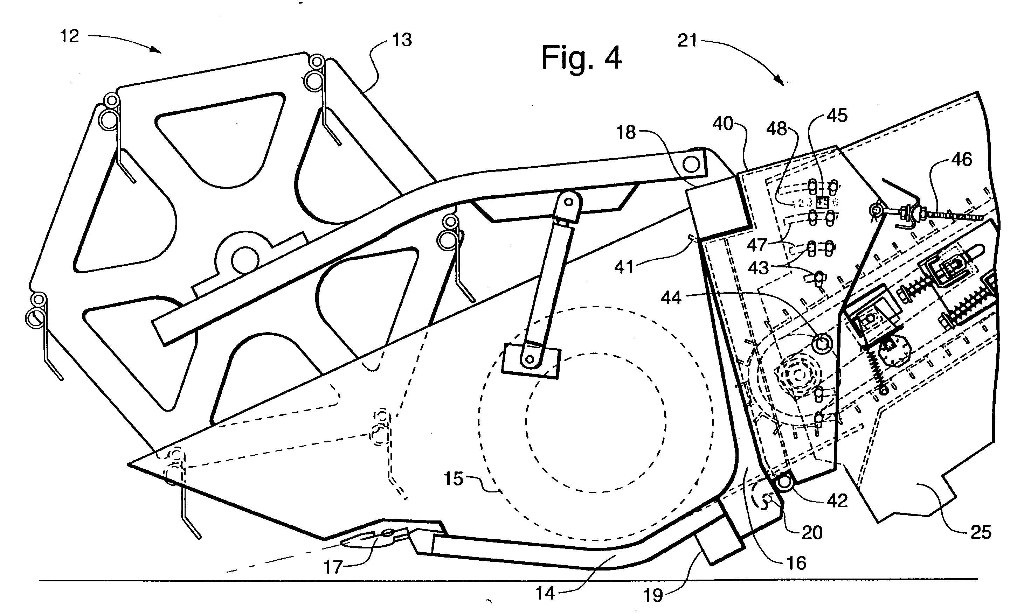

The invention relates to the feederhouse 21 of the combine harvester 1. The intake opening of the feederhouse 21 is provided with a pivoting faceplate 40 which is shown generally in Figure 2 and more specifically in Figures 3 and 4. The pivoting faceplate 40 is located between the feederhouse 21 and the header 12 for allowing the header 12 to be re-positioned relative to the ground. This is illustrated by Figures 3 and 4, showing different positions of the auger trough 14 and sicklebar cutter 17 relative to the ground.

The description of the faceplate 40 that follows is directed to the left side of the feederhouse 21, however an symmetrical structure exists on the right side. For brevity purposes only the one side is discussed. The faceplate 40 is pivotally attached to sidewalls 25 of the feederhouse 21 by a pivot 44, such that the faceplate 40 can rotate thereabout relative to the feederhouse 21. The faceplate 40 is secured to the feederhouse 21 by a series of clamping means 43 which may be constituted by threaded bolts that are inserted through an arcuate slot 47. In this embodiment there are several arcuate slots 47 positioned on the sidewall 25 of the feederhouse. The curved nature of these slots relative to the pivot 44 allows for the faceplate to be adjusted to a variety of positions and clamped at a desirable angle. To facilitate proper adjustment of the faceplate 40, it is provided with a faceplate adjustment rod 46. This rod 46 has a front end pivotally affixed to the faceplate 40. The opposite end of the rod 46 is inserted through a bracket affixed to the sidewall 46. The adjustment rod 46 is threaded and affixed by matching nuts to a bracket on the sidewall 25. After loosening the clamping means 43, the nuts on the adjustment rod 46 may be rotated to adjust the position of the faceplate 40. Also present on the faceplate 40 is an indicator aperture 45. On the sidewall 25 there are a series of faceplate position indicia constituted by marks 48. A single mark 48 is visible through the indicator aperture 45 when the latter is aligned with the mark 48 on the sidewall. This allows the operator to easily determine the position of the faceplate 40 relative to the feederhouse 21. The marks 48 illustrated in Figures 2, 3 and 4 are the numerals 1 through 5, however other descriptive indicia could be used.

Attached at the front of the feederhouse 21 and pivoting faceplate 40 is the header 12. The faceplate 40 has a header cradle 41 supporting the top beam 18 of the header frame 16. A trough pin attach 42 on the faceplate 40 hooks over a trough pin 20 which is affixed to the header frame 16. Attached to the header frame 16 are the trough frame 19 and the auger trough 14. The previously mentioned sicklebar cutter 17 is attached to the front end of the auger trough 14 and the previously discussed transverse auger 15 is arranged above the auger trough 14. While the header described is a small grain or wheat header, other types of header such a corn header can be used with the pivoting faceplate 40 without any significant modification to the header cradle 41 or the trough pin attach 42.

To adjust the position of the faceplate 40, the clamping means 43 are loosened. The adjustment rod 46 and nuts are adjusted allowing the faceplate to rotate about the pivot 44. The operator can observe the position of the faceplate 40 by viewing the faceplate position marks 48 through the indicator aperture 45. When a proper position mark 48 is observed through the indicator aperture 45, the clamping means 43 are tightened, thus securing the faceplate 40 in a desirable position.

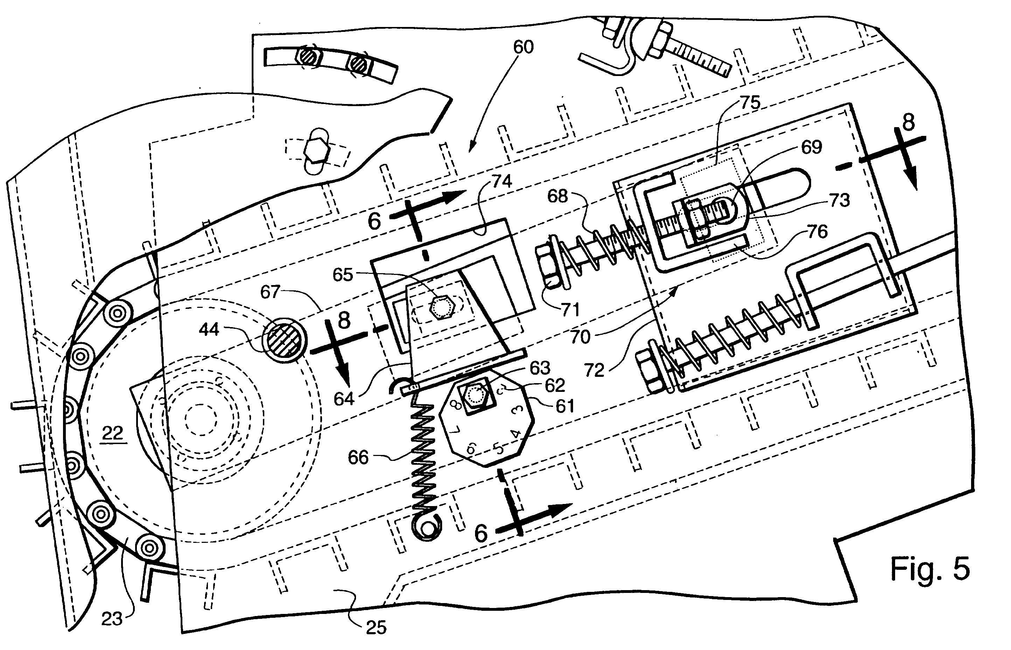

The front drum adjustment mechanism 60 can be generally observed in Figure 2 and specifically seen in Figures 5, 6, 7 and 8. The feederhouse 21 comprises a conveyor chain 23 extending around a front drum 22 near the mouth of the feederhouse and a rear drum 24 adjacent the threshing and separating system of the harvester. The front drum adjustment mechanism 60 allows the front drum and the conveyor chain 23 to be positioned either closer to or further from the feederhouse floor 25A. The conveyor chain 23 is tensioned by a drum arm spring 68 which allows slight movement of the front drum 22 for adaptation to variations in the crop flow moving through the feederhouse 21. The adjustment mechanism 60 comprises a drum arm 67 that is pivotally attached to the sidewall 25 of the feederhouse 21. The front drum 22 is rotationally attached to the front end of the drum arms 67. A cam 61, attached to the sidewall 25 by a cam bolt 63, has been provided for adjusting the lowest position of the drum arm 67. The cam 61 contacts an adjustment plate 64 which is attached to the drum arm 67. By rotating the cam, the adjustment plate 64 alters the position of the drum arm 67. By raising or lowering the drum arm 64 in this manner, the front drum 22 is re-positioned. There are additional features and components that will be described in greater detail later.

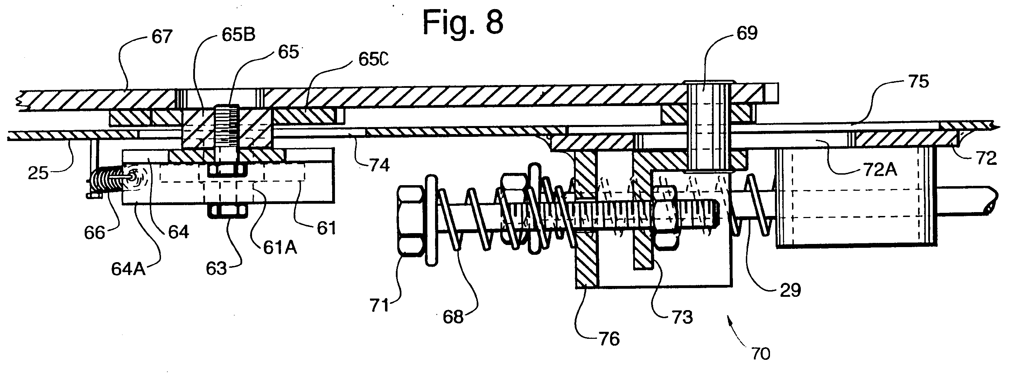

Opposite from the front drum 22 on the drum arm 67 is the arm pivot mount 70 (Figures 5 and 8) which is connected to a wall plate 72 affixed to the sidewall 25. The drum arm 67 has an arm pivot 69, which passes through a pivot aperture 75 in the sidewall 25 and through an aperture 72A in the wall plate 72. The arm pivot 69 is rotationally attached to a bracket or pivot plate 73 which is positioned adjacent the wall plate 72. Inserted into the pivot plate 73 is a threaded spring bolt 71 which is secured by a nut. The spring bolt 71 also passes through a tension bracket 76 which is welded to the wall plate 72. Between the tension bracket 76 and the head of the spring bolt 71 is mounted the drum arm spring 69. The resilience of the spring 68 allows the arm pivot mount 70 to yield in the longitudinal direction for adjusting to minor variations in the crop flow which would otherwise damage the front drum 22 or conveyor chain 23. If the front drum 22 or conveyor chain 23 were to shift, the pivot plate 73 could move to either the left or right (when viewed Figure 5). The drum arm spring 68 would allow for this brief position change and then return the arm pivot 69 to its normal position.

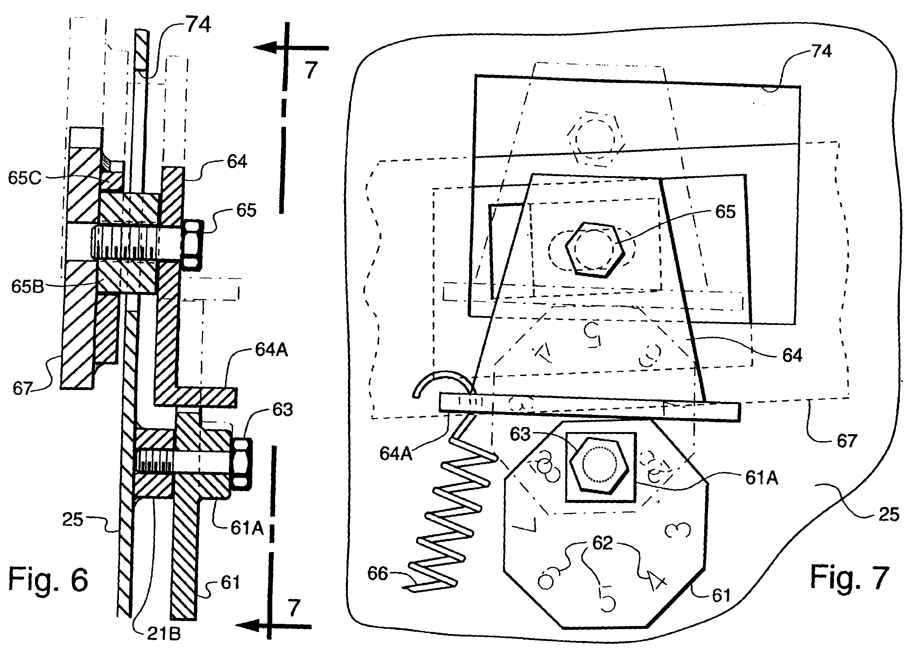

When a permanent adjustment of the height of the conveyor chain 23 is desired, the cam 61 can be adjusted. The cam 61 has several cam position indicia or marks 62. In the preferred embodiment, the numbers 1-8 are used as marks 62. However, other symbols may be used. The cam 61 of this embodiment is eight-sided, but this shape may be varied, e.g. by choosing another polygon. The cam 61 is secured to the sidewall 25 by a cam bolt 63 which is inserted into a nut 21B welded to the sidewall 25. There is a bolt guide 61A (shown in Figure 6) which allows the easy insertion and tightening of the cam bolt 63 into the cam without marring the cam position indicia 62. The edge of the cam 61 is slideably contacted by the lower lip 64 of the adjustment plate 64. This lip 64A is integral with the adjustment plate 64, which is secured to the drum arm 67 by a plate attach means. In this embodiment, the attach means comprises a threaded bolt 65 inserted in a nut 65B that is affixed to the drum arm 67. The inner portion of the nut 65B is mounted in a hole in a reinforcement plate 65C which is welded to the drum arm 67. The nut 65B and the bolt 65 extend through an adjustment aperture 74 in the sidewall 25. Obviously, there are several means available to affix the adjustment plate 64 to the drum arm 67. To insure that the adjustment plate 64 remains in slideable contact with the cam 61, there is a tensioning spring 66 attached to the adjustment plate lip 64A and a pin on the sidewall 25. The tensioning spring 66 forces the adjustment plate 64 downwards into contact with the cam 61.

To adjust the vertical position of the front drum, the cam bolt 61 is loosened and the cam 61 is rotated to align a single cam position mark 62 with the plate lip 64A on the adjustment plate 64. In the present embodiment, a single side of eight-sided cam 61 is brought into flush contact with the lip 64A. The cam bolt 63 is then tightened.

In an alternative embodiment the rear of the cam plate 61 may be provided with one or more protrusions which can be inserted in a series of holes in the sidewall 25, which holes are positioned along a circular pattern around the cam bolt 63. The insertion of the protrusion into one of the holes secures the position of the cam 61 and prevents the displacement of the latter under action of the moving drum arm 67 or following from other mechanical vibrations. Alternatively, one or more protrusions may be provided on the sidewall 25 for insertion in holes in the cam 61.

While the front drum adjustment mechanism 60 described and illustrated above is located on the left side of the feederhouse 21, there is a symmetrical mechanism on the right side. For brevity purposes, only the mechanism on the left side has been discussed.

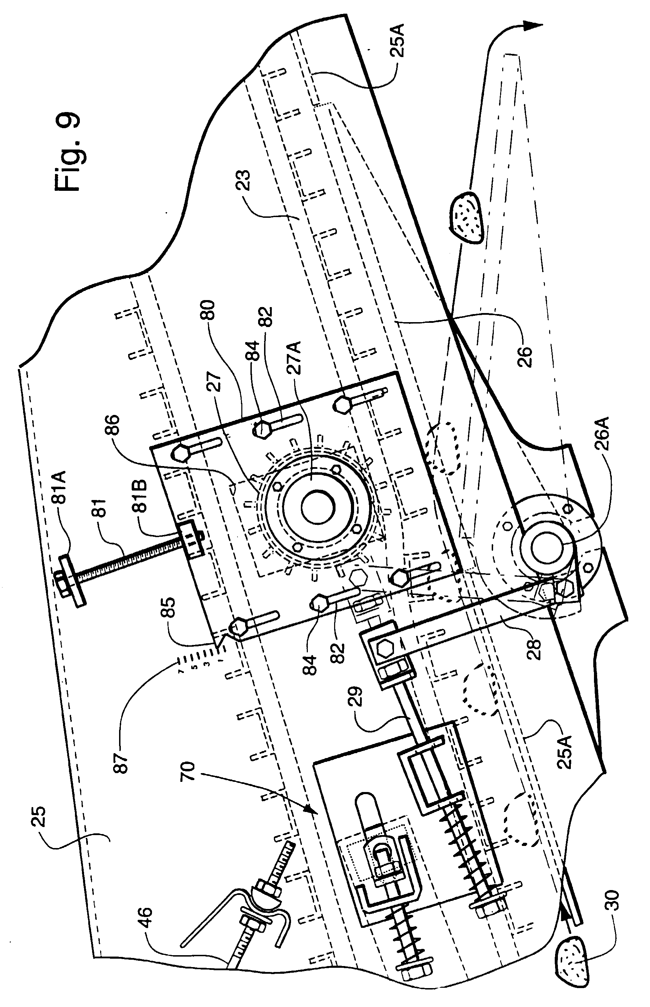

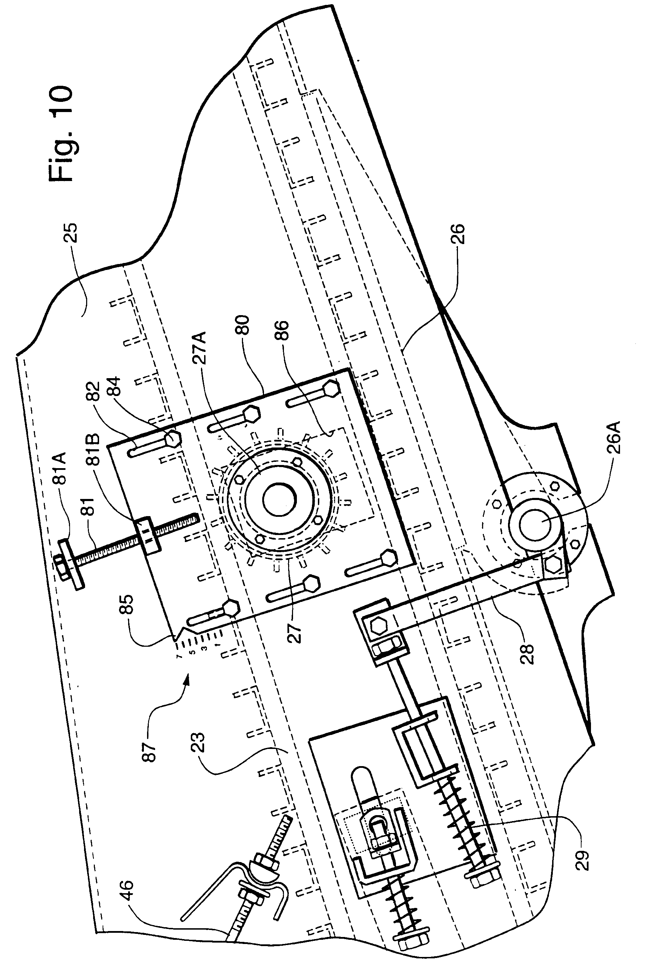

The feederhouse 21 is provided with a stone roll assembly which can be generally observed in Figure 2 and specifically seen in Figures 9 and 10. The stone roll assembly includes a stone roll 27 which is mounted inside the feederhouse 21 between the upper and lower runs of the conveyor chain 23. The stone roll 27 is journalled in a pair of stone roll mount plates 80 (only one shown). By raising or lowering the stone roll mount plates 80, the stone roll 27 is positioned either further from or closer to the feederhouse floor 25A. The position of the stone roll 27 will determine the size of a stone 30 which is pushed by the stone roll 27 through the stone trap door 26.

The stone roll mount plate 80 is affixed to the sidewall 25 by a series of plate bolts 84. A plate bolt 84 is inserted through a plate slot 82 in the stone roll mount plate 80. In the preferred embodiment, there are six plate slots which each receive a single plate bolt 84. The stone roll mount plate 80 covers a stone roll aperture 86 in the sidewall 25. The shaft of the stone roll 27 is inserted through the stone roll aperture 86 and is rotationally attached to a bearing 27A of the stone roll mount plate 80.

To facilitate adjustment of the position of the stone roll mount plate 80 and the attached stone roll 27, there is a roll adjust rod 81 which is threaded and inserted into a roll nut 81B. The roll nut 81B is welded to the top of the stone roll mount plate 80. The opposite end of the rod 81 is attached to the sidewall 25 by a roll bracket 81A.

The stone roll 27 deflects the lower run of the conveyor chain 23. When a stone 30 which is too large to pass between the deflected conveyor chain 23 and the feederhouse floor 25A, a stone trap door 26 pivots open discharging the stone 30 (as seen in Figure 9). The stone trap door 26 is pivotally attached at a pivot 26A to the feederhouse 21 in alignment with the feederhouse floor 25A. The door 26 is held in position by a door linkage 28 attached to the stone door pivot 26A. The door linkage 28 is controlled by a spring linkage 29. One end of this linkage 29 is attached to the door linkage 28.

The stone roll 27 forces the stone 30 out of the feederhouse 21, the door linkage 28 and the spring linkage 29 pull the stone trap door 26 shut.

To help adjustment of the position of the stone roll 27, there are a series of stone roll position indicia or marks 87 provided on the sidewall 25. In the preferred embodiment, the indicia are a series of strikes accompanied by a series of numerals. However, several different indicia are possible. The upper left corner of the stone roll mount plate 80 is provided with a pointer 85. The pointer could also be re-configured to be an aperture as the indicator aperture 45 on the pivoting faceplate.

To adjust the position of the stone roll 27, the operator loosens the plate bolts 84 securing the stone roll mount plate 80 to the sidewall 25. The roll adjust rod 81 is rotated so as to align the pointer 85 with one of the stone roll position marks 87. When the proper adjustment is completed, the plate bolts 84 are tightened so as to secure the stone roll mount plate 80 to the sidewall 25.

Again, the stone roll mount plate 80 discussed and illustrated is viewed from the left side of the feederhouse 25. However, symmetrical components exist on the right side. For brevity only the left has been discussed.

## Claims

1. A combine harvester (1), comprising:
a wheeled main frame;
crop processing means (3, 4), mounted to said main frame;
a feederhouse (21) attached to said main frame for conveying harvested crop to said crop processing means and comprising a pair of sidewalls (25) between which extends a conveyor (23) trained about a front drum (22) and a rear drum (24), said front drum (22) being mounted to at least one pivot arm (67) which is pivotally attached to one of said sidewalls (25); and
means (61) defining the lowest position of said pivot arm (67),
characterized in that it further comprises an adjustment mechanism (60) for adjusting the position of said defining means.

2. A combine harvester according to claim 1, characterized in that said adjustment mechanism comprises an adjustment plate (64) attached to the pivot arm (67) and a cam (61) which is pivotally attached to the adjacent sidewall (25) for slideable contact with said adjustment plate (64).

3. A combine harvester according to claim 3, characterized in that said cam (61) has the shape of a polygon which is mounted for pivotal movement about an eccentric axis (63).

4. A combine harvester according to claim 3, characterized in that the adjustment plate (64) has a lip (64A) slideably contacting a side of said polygon and said adjustment mechanism (60) further comprises a tensioning spring (66) affixed between said adjustment plate (64) and the sidewall (25).

5. A combine harvester according to any of the claims 2 to 4, characterized in that said adjustment mechanism (60) includes indicia (62) for the position of said defining means.

6. A combine harvester according to claim 5, when appended to claim 3 or 4, characterized in that said indicia comprise numerals (62) near the sides of said polygon.

7. A combine harvester according to any of the preceding claims, characterized in that:
said feederhouse (21) is provided with a faceplate (40) which is pivotally attached to at least one sidewall (25) for receiving a header (12); and
said feederhouse (21) has a plurality of faceplate position indicia (48).

8. A combine harvester according to claim 7, characterized in that said faceplate position indicia (48) are provided on said sidewall (25) and said faceplate (40) has an indicator aperture (45), capable of alignment with said indicia (48) and allowing a single one of said position indicia (48) to be viewed simultaneously.

9. A combine harvester according to claim 7 or 8, characterized in that:
said sidewall (25) has a plurality of arcuate slots (47) therein; and
said feederhouse (21) further comprises a faceplate adjustment rod (46) attached to the faceplate (40) and the sidewall (25), and a clamping means (43) inserted into a single arcuate slot (47) for affixing the faceplate (40) to the sidewall (25).

10. A combine harvester according to any of the preceding claims, characterized in that:
said feederhouse (21) comprises a stone ejection mechanism including a stone roll (27) mounted between the sidewalls (25) and a stone trap door (26) attached to the feederhouse near said stone roll (27); and
said stone roll (27) is journalled in a mount plate (80) enabling attachment of the stone roll (27) to a sidewall (25) in a plurality of positions relative to said stone trap door (26).

11. A combine harvester according to claim 10, characterized in that said feederhouse (21) has a plurality of stone roll indicia (87) for indicating said relative position of the stone roll (27) to said stone trap door (26).

12. A combine harvester according to claim 11, characterized in that said stone roll indicia (87) are provided on said sidewall (25) and the mount plate (80) has a pointer (85) directed to one of said indicia (87).

13. A combine harvester according to claim 11 or 12, characterized in that:
said mount plate (80) has a plurality of slots (82) and a like plurality of bolts (84) inserted through said slots and into said sidewall (25) for securing said mount plate to said sidewall (25); and
said feederhouse (21) further comprises a roll adjust rod (81) mounted between said sidewall (25) and said mount plate (80) for facilitating the movement of said mount plate (80) when said bolts (84) have been loosened.
